# FASCICULE DE BREVET EUROPEEN

(11) **EP 0 789 829 B1**
(45) Date de publication et mention de la délivrance du brevet: **08.12.1999**
(21) Numéro de dépôt: 95934187.6
(22) Date de dépôt: 09.10.1995
(51) Int. Cl.: F27D 3/02, C03B 35/18

(54) **ENSEMBLE DE ROULEAU POUR LE TRANSPORT D'ARTICLES A TEMPERATURE ELEVEE**
ZUSAMMENBAU VON TRAGROLLEN ZUR HOCHTEMPERATURFÖRDERUNG VON ARTIKELN
ROLLER ASSEMBLY FOR THE HIGH-TEMPERATURE TRANSPORT OF ARTICLES

(30) Priorité: 31.10.1994 FR 9413345
(43) Date de publication de la demande: 20.08.1997
(73) Titulaire: VESUVIUS FRANCE S.A., 59750 Feignies (FR)
(72) Inventeur: GAUTIER, David, 59750 Feignies (FR)
(74) Mandataire: Kohn, Philippe
(86) Numéro de dépôt international: FR9501312
(87) Numéro de publication internationale: WO9613691

(56) Documents cités:
- EP-A- 0 055 927
- DE-C- 3 924 277
- FR-A- 2 550 172
- FR-A- 2 691 217
- US-A- 4 242 782
- US-A- 5 146 675
- US-A- 5 316 129

## Description

L'invention concerne un ensemble de rouleau pour le transport d'articles à température élevée.

Plus précisément elle concerne un ensemble de rouleau pour le transport d'articles à température élevée, comprenant:
- un rouleau de céramique comportant un axe longitudinal et comportant deux extrémités;
- au moins un embout métallique de forme générale cylindrique, monté à au moins une extrémité du rouleau;
- des moyens, interposés entre l'extrémité du rouleau et l'embout, pour lier l'embout et le rouleau en rotation, pour retenir axialement l'embout par rapport au rouleau, et pour centrer le rouleau par rapport à l'embout.

Les installations de trempe ou de recuit du verre ou de transport de tôles comportent un convoyeur dans lequel des ensembles de rouleau transportent des articles tels que des feuilles de verre ou des tôles d'acier. Ces ensembles de rouleau sont généralement constitués d'un rouleau, par exemple, en silice fondue, ci de deux embouts métallique montés à chacune des extrémités du rouleau. Les embouts sont entraînés en rotation par un mécanisme de transmission qui fait partie du convoyeur, par exemple au moyen de chaînes ou d'engrenages.

Il est important qu'une liaison en rotation efficace soit assurée entre les embouts et le rouleau. En effet, tout glissement du rouleau par rapport à l'embout entraîne un marquage des articles. De plus, cette liaison doit être assurée à une température élevée pouvant atteindre 700 °C. Cette température pose des problèmes de dilatation différentielle entre le rouleau et l'embout métallique, dont la dilatation est beaucoup plus importante.

Afin de compenser cette dilatation, on a déjà utilisé des éléments élastiques. Par exemple le document US-A-4,404,011 décrit des lames de ressort et le document US-A-4,399,598 décrit des anneaux élastiques fendus. Cependant, avec ce type de solution, la transmission d'un couple entre le rouleau et l'embout est assurée par friction. Or le module d'élasticité et le serrage des éléments élastiques chute à la température
d'utilisation. La transmission du couple n'est donc pas correctement assurée. Selon une autre solution connue du document EP-A-0 615 960, on utilise des éléments bimétalliques dont la cambrure augmente en même temps que la température. On compense ainsi partiellement la chute des caractéristiques des matériaux à température élevée. Cependant, dans cette solution également, la transmission d'un couple entre le rouleau et l'embout par friction n'est pas correctement assurée.

On connaît également du document US-A-5,146,675 des ensembles de rouleau dans lesquels la liaison entre le rouleau et l'embout est assurée par une clavette en appui sur méplat. Ce moyen permet une liaison en rotation efficace. L'embout est également bien retenu axialement et ne peut pas se désolidariser du rouleau. Mais le centrage du rouleau par rapport aux embouts est très médiocre en raison de l'espace annulaire qui apparaît à haute température entre les embouts et le rouleau. De plus à température élevée, par suite de la dilatation thermique différentielle de l'embout, un jeu apparait entre la clavette et le méplat. Par suite, l'embout tourne légèrement par rapport air rouleau jusqu'à ce que l'arête de la clavette revienne en contact avec le méplat. Lorsque le rouleau refroidit, l'embout reprend ses dimensions initiales, et la clavette exerce sur le rouleau des contraintes qui peuvent le casser.
On connaît encore du document FR-A-2 550 172 un rouleau dont chacune des extrémités est munie d'un embout métallique. Une bague métallique ayant un coefficient de dilatation supérieur à celui de l'embout est interposée entre ce dernier et l'extrémité du rouleau. L'extrémité du rouleau est solidarisée en rotation par une clavette avec l'embout. Les parties pré-caractérisantes des revendications 1, 2 et 6 sont basées sur ce document.

Cependant, dans cette fixation, la bague présente une épaisseur peu importante relativement au diamètre de l'embout. Pour compenser l'écart de dilatation entre l'embout et le rouleau, il faudrait par conséquent que le métal dont elle est réalisée présente un-coefficient de dilatation plusieurs dizaines de fois supérieur à celui de l'embout, ce qui est impossible à réaliser en pratique.

D'autre part, en ce qui concerne la clavette, on retrouvera un inconvénient identique à celui qui existe dans le cas du document US-A-5,146,675. A haute température, un jeu apparaîtra entre la clavette et le méplat, avec le risque de casser le rouleau lorsqu'il reviendra à la température ambiante.
La présente invention a pour objet un ensemble de rouleau qui remédie à ces inconvénients de l'art antérieur. Il doit permettre à la fois le centrage et l'entraînement efficaces du rouleau par les embouts. Il doit également permettre de retenir axialement l'embout par rapport au rouleau.
Ces buts sont atteints par le fait que les moyens pour lier l'embout et le rouleau en rotation et pour retenir axialement l'embout par rapport au rouleau sont aptes à compenser la dilatation thermique différentielle de l'embout par rapport au rouleau à la dite température élevée, et par le fait que ces moyens sont distincts et indépendants des moyens pour centrer le rouleau par rapport à l'embout.
Grâce à cette caractéristique, le centrage du rouleau par rapport à l'embout peut être assuré par des éléments élastiques, par exemple des lames de ressort ou des éléments bimétalliques. Ces éléments n'assurent pas la transmission du couple. De ce fait il n'est pas nécessaire d'atteindre une pression de contact élevée entre les éléments et l'extrémité du rouleau d'une part, entre les éléments et l'embout d'autre part. Ceci résulte du fait que le poids du rouleau et de la charge qu'il supporte ne sont pas très importants. De ce fait, les efforts radiaux nécessaires au centrage sont peu importants, de l'ordre de dix à vingt fois plus faibles que les efforts qui sont requis pour assurer l'entraînement en rotation du rouleau par frottement uniquement. Par suite, en dépit de la température élevée et de la chute du module d'élasticité qu'elle entraîne, le centrage peut néanmoins être assuré efficacement.

Le fait que les moyens d'entraînement en rotation sont aptes à compenser la dilatation de l'embout empêche une rotation relative de l'embout par rapport au rouleau à température élevée. On supprime ainsi le risque de détruire le rouleau lorsque l'embout reprend sa température initiale.

Les moyens pour centrer le rouleau par rapport à l'embout sont constitués par des éléments bimétalliques longitudinaux ou radiaux ou par des éléments élastiques longitudinaux ou radiaux.

Différents modes de réalisation de l'invention sont définis aux revendications 1, 2 et 5.

Selon une variante de réalisation les moyens pour lier l'embout et le rouleau en rotation et pour retenir axialement l'embout par rapport au rouleau sont constitués par une lame bimétallique fixée à l'embout et appliquée sur un méplat de l'extrémité du rouleau.

Selon encore une autre variante de réalisation les moyens pour lier l'embout et le rouleau en rotation et pour retenir axialement l'embout par rapport au rouleau sont constitués par une clavette fixée à l'embout et appliquée par un moyen élastique sur un méplat de l'extrémité du rouleau.

Enfin, selon une variante de réalisation les moyens pour lier l'embout et le rouleau en rotation et pour retenir axialement l'embout par rapport au rouleau sont constitués par une goupille pénétrant dans un logement pratiqué dans l'extrémité du rouleau.
D'autres caractéristiques de l'invention apparaîtront encore à la lecture de la description qui suit d'exemples de réalisations donnés à titre illustratif en référence aux figures annexées. Sur ces dessins:
- la figure 1 est une vue de l'extrémité d'un ensemble de rouleau conforme à l'invention;
- la figure 2 est une vue de détail d'une première variante de réalisation des moyens de centrage;
- la figure 3 est une vue de détail d'une seconde variante de réalisation des moyens de centrage;
- la figure 4 est une vue de détail d'une première variante de réalisation des moyens de liaison en rotation du rouleau et de l'embout.
- la figure 5 est une vue de détail d'une seconde variante de réalisation des moyens de liaison en rotation du rouleau et de l'embout.
- la figure 6 est une vue de détail d'une troisième variante de réalisation des moyens de liaison en rotation du rouleau et de l'embout.

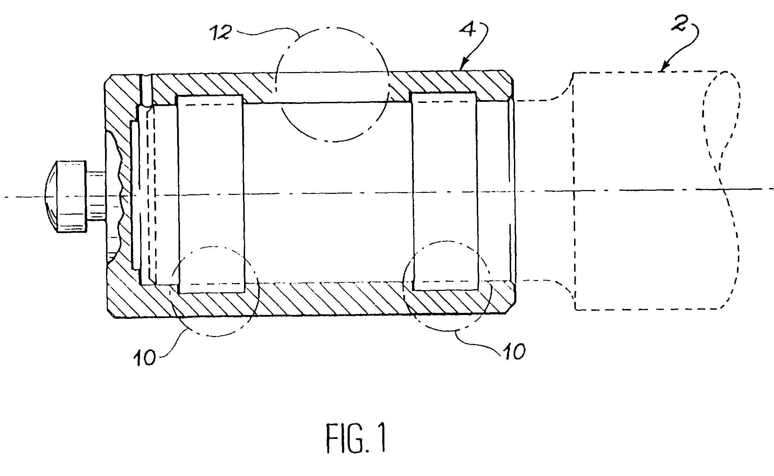

L'ensemble de rouleau représenté sur la figure 1 est constitué d'une part d'un rouleau 2 de céramique, généralement la silice vitreuse, et de deux embouts métalliques 4, montés à chacune des extrémités du rouleau 2. Un seul embout 4 a été représenté sur la figure 1.

Le rouleau 2 comporte une partie cylindrique sur laquelle est transportée une charge, par exemple des feuilles de verre, et deux extrémités 6, de plus petit diamètre, sur lesquelles sont montés les embouts 4. Le rouleau 2 est monté tournant de manière conventionnelle autour de son axe longitudinal X-X.

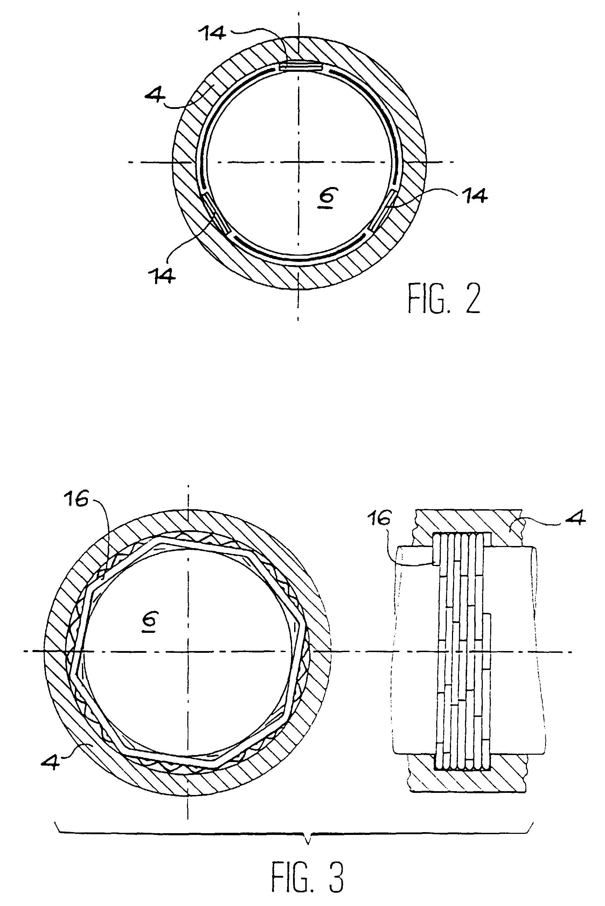

Des moyens de centrage 10 sont interposés entre l'embout 4 et l'extrémité 6 du rouleau
2. D'autre part des moyens 12 de liaison en rotation du rouleau 2 et de l'embout 4 sont également prévus. Les moyens de centrage 10 sont distincts et indépendants des moyens de liaison en rotation du rouleau 2 et de l'embout 4, comme on peut le constater sur la figure 1.
On a représenté sur la figure 2 une première variante des moyens de centrage. Ils sont constitués par trois éléments bimétalliques 14 disposés circonférentiellement autour de l'extrémité du rouleau 2 à 120 ° l'un de l'autre. Ces élément sont constitués de deux métaux ayant des coefficients de dilatation thermique différents. Leur courbure augmente avec la température, ce qui permet de compenser la dilatation différentielle de l'embout 4 et du rouleau 2. Des éléments bimétalliques de ce type sont décrits dans le document EP-A-0 574 278. Des entretoises 15 séparent les éléments 14.

On a représenté sur la figure 3 une seconde variante des moyens de centrage. Ils sont constitués par des ressorts hélicoïdaux 16 analogues à ceux qui sont décrits dans le document EP-A-0 615 960.

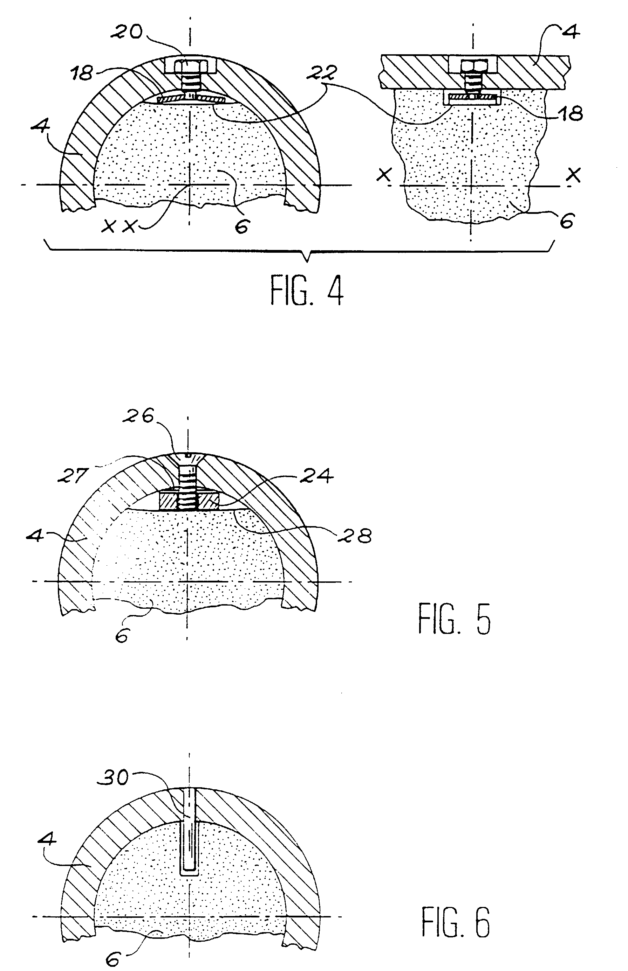

On a représenté sur la figure 4 une variante des moyens d'entraînement en rotation du rouleau 2 par l'embout 4. Un lame 18 est fixée à l'embout 4 par une vis 20. La lame 18 peut être une lame élastique ou bimétallique. Elle s'applique sur un méplat 22 formé sur l'extrémité 6 du rouleau 2. La lame assure ainsi la liaison en rotation de l'embout 4 et du rouleau 2. En outre, la largeur du méplat correspond à celle de la lame de telle sorte que l'embout 4 est aussi bloqué selon la direction X-X de l'axe longitudinal du rouleau 2. La lame assure ainsi deux fonctions simultanément. L'élasticité de la lame 18 permet de compenser la dilatation de l'embout de telle sorte que ses extrémités restent appliquées contre le méplat 22, même à une température élevée.
On a représenté sur la figure 5 une seconde variante des moyens d'entraînement en rotation du rouleau 2 par l'embout 4. Une clavette 24 est retenue en rotation par un axe 26 vissé dans l'embout. La clavette peut coulisser librement sur l'axe 26. Une rondelle élastique ou un ressort 27 est intercalé entre l'embout et la clavette. La rondelle élastique permet d'accommoder la dilatation différentielle de l'embout. De manière similaire à ce qui a été décrit en référence à la figure 4, la clavette s'applique sur un méplat ou une surface incurvée 28 de l'extrémité 6 du rouleau 2. La clavette est également bloquée longitudinalement de manière à immobiliser l'embout 4 par rapport au rouleau 2.

On a représenté sur la figure 6 une troisième variante des moyens d'entraînement en rotation du rouleau 2 par l'embout 4. Une simple goupille 30, par exemple une goupille à expansion, assure les deux fonctions de liaison en rotation et de liaison selon la direction X-X.
Lorsque l'embout se dilate, la goupille reste engagée dans le rouleau de telle sorte qu'aucune rotation de l'embout par rapport au rouleau ne peut se produire.
On constate ainsi que, dans l'invention, contrairement aux dispositifs connus, les moyens de centrage représentés sur les figures 2 et 3 n'assurent que le centrage de l'embout 4 par rapport au rouleau 2. Les fonctions de liaison en rotation et de liaison selon la direction X-X sont assurées indépendamment par un autre moyen indépendant, par exemple ceux qui ont été décrits, à titre illustratif et nullement limitatif en référence aux figures 4 à 6. Du fait que les moyens de centrage des figures 2 et 3 (ou d'autres moyens de centrage) doivent assurer seulement la fonction de centrage, la chute du module d'élasticité des matériaux à haute température n'est pas préjudiciable parce que, comme on l'a expliqué précédemment, le poids du rouleau et de la charge qu'il supporte ne sont pas très importants. De ce fait, les efforts radiaux nécessaires au centrage sont peu importants, de l'ordre de dix à vingt fois plus faibles que les efforts requis pour assurer l'entraînement en rotation du rouleau 2. A titre d'exemple, un effort radial de 5 kg est suffisant pour assurer le centrage d'un rouleau pour lequel un effort de 100 kg serait nécessaire si on souhaitait également entraîner le rouleau 2 par le seul effet des forces de frottement.
On constate également que dans l'ensemble des modes de réalisation décrits, le blocage en rotation et en translation selon l'axe du rouleau ne sont pas assurés par des forces de frottement, mais par des appuis sur des surfaces inclinées par rapport à un cercle centré sur l'axe du rouleau et passant par le point de contact du rouleau et du moyen de blocage en rotation.

## Revendications

1. Ensemble de rouleaux pour le transport d'articles à température élevée, comprenant :
- un rouleau de céramique comportant un axe longitudinal et comportant deux extrémités, au moins un embout métallique de forme générale cylindrique, monté à au moins une extrémité du rouleau ;
- des moyens pour lier l'embout et le rouleau (2) en rotation et pour retenir axialement l'embout (4) par rapport au rouleau (2), ces moyens étant en appui sur une surface (22, 28) de l'embout ; et
- des moyens pour centrer le rouleau (2) par rapport à l'embout (4),
les moyens pour lier l'embout et le rouleau en rotation et pour retenir axialement l'embout (4) par rapport au rouleau étant distincts et indépendants des moyens pour centrer le rouleau par rapport à l'embout, et les moyens (10) pour centrer l'embout par rapport au rouleau (2) étant également aptes à compenser une dilatation thermique différentielle de l'embout par rapport au rouleau à ladite température élevée,
caractérisé en ce que les moyens pour lier l'embout et le rouleau en rotation et pour retenir axialement l'embout par rapport au rouleau comportent une lame élastique, notamment bi-métallique (18), fixée à l'embout (4) et appliquée sur un méplat à l'extrémité du rouleau (2).

2. Ensemble de rouleaux pour le transport d'articles à température élevée, comprenant :
- un rouleau de céramique comportant un axe longitudinal et comportant deux extrémités, au moins un embout métallique de forme générale cylindrique, monté à au moins une extrémité du rouleau ;
- des moyens pour lier l'embout et le rouleau (2) en rotation et pour retenir axialement l'embout (4) par rapport au rouleau (2), ces moyens étant en appui sur une surface (22, 28) de l'embout ; et
- des moyens pour centrer le rouleau (2) par rapport à l'embout (4),
les moyens pour lier l'embout et le rouleau en rotation et pour retenir axialement l'embout (4) par rapport au rouleau étant distincts et indépendants des moyens pour centrer le rouleau par rapport à l'embout, et les moyens (10) pour centrer l'embout par rapport au rouleau (2) étant également aptes à compenser une dilatation thermique différentielle de l'embout par rapport au rouleau à ladite température élevée,
caractérisé en ce que les moyens pour lier l'embout et le rouleau en rotation et pour retenir axialement l'embout par rapport au rouleau comportent une clavette (24) fixée à l'embout (4) et appliquée par des moyens élastiques (27) sur un méplat (28) de l'extrémité du rouleau.

3. Ensemble de rouleaux selon la revendication 2, caractérisé en ce que la clavette (24) coulisse librement sur un axe (26) fixé à l'embout.

4. Ensemble de rouleaux selon l'une quelconque des revendications précédentes, caractérisé en ce que le méplat possède une largeur qui correspond à celle de la clavette (24) ou de la lame élastique (18).

5. Ensemble de rouleaux pour le transport d'articles à température élevée, comprenant :
- un rouleau de céramique comportant un axe longitudinal et comportant deux extrémités, au moins un embout métallique de forme générale cylindrique, monté à au moins une extrémité du rouleau ;
- des moyens pour lier l'embout et le rouleau (2) en rotation et pour retenir axialement l'embout (4) par rapport au rouleau (2) ; et
- des moyens pour centrer le rouleau (2) par rapport à l'embout (4),
les moyens pour lier l'embout et le rouleau en rotation et pour retenir axialement l'embout (4) par rapport au rouleau étant distincts et indépendants des moyens pour centrer le rouleau par rapport à l'embout, et les moyens (10) pour centrer l'embout par rapport au rouleau (2) étant également aptes à compenser une dilatation thermique différentielle de l'embout par rapport au rouleau à ladite température élevée,
caractérisé en ce que les moyens pour lier l'embout et le rouleau (2) en rotation et pour retenir axialement l'embout (4) par rapport au rouleau (2) sont constitués par une goupille (30) pénétrant dans un logement pratiqué dans l'extrémité du rouleau (2).

6. Ensemble de rouleaux selon l'une quelconque des revendications précédentes, caractérisé en ce que les moyens pour centrer le rouleau par rapport à l'embout sont constitués par des éléments bimétalliques (14) longitudinaux ou radiaux.

7. Ensemble de rouleaux selon l'une quelconque des revendications précédentes, caractérisé en ce que les moyens pour centrer le rouleau par rapport à l'embout sont constitués par des éléments élastiques (16) longitudinaux ou radiaux.

## Patentansprüche

1. Rollenkonstruktion für den Transport von Gegenständen mit hoher Temperatur, umfassend:
- eine Keramikrolle mit einer Längsachse und mit zwei Enden, wobei an mindestens einem Ende der Rolle ein Metallansatzstück von allgemein zylindrischer Form angebracht ist,
- Mittel, um das Ansatzstück und die Rolle (2) drehfest zu verbinden und um das Ansatzstück (4) in Bezug zur Rolle (2) axial festzuhalten, wobei sich diese Mittel auf einer Oberfläche (22, 28) des Ansatzstücks abstützen; und
- Mittel, um die Rolle (2) in Bezug zum Ansatzstück (4) zu zentrieren;
- wobei die Mittel zum drehfesten Verbinden des Ansatzstücks und der Rolle und zum axialen Festhalten des Ansatzstücks (4) in Bezug zur Rolle getrennt und unabhängig von den Mitteln zum Zentrieren der Rolle in Bezug zum Ansatzstück sind, und die Mittel (10) zum Zentrieren des Ansatzstücks in Bezug zur Rolle (2) auch geeignet sind, um eine unterschiedliche Wärmedehnung des Ansatzstücks in Bezug zur Rolle bei der besagten hohen Temperatur auszugleichen.

2. Rollenkonstruktion für den Transport von Gegenständen mit hoher Temperatur, umfassend:
- eine Keramikrolle mit einer Längsachse und mit zwei Enden, wobei an mindestens einem Ende der Rolle ein Metallansatzstück von allgemein zylindrischer Form angebracht ist,
- Mittel, um das Ansatzstück und die Rolle (2) drehfest zu verbinden und um das Ansatzstück (4) in Bezug zur Rolle (2) axial festzuhalten, wobei sich diese Mittel auf einer Oberfläche (22, 28) des Ansatzstücks abstützen; und
- Mittel, um die Rolle (2) in Bezug zum Ansatzstück (4) zu zentrieren;
- wobei die Mittel zum drehfesten Verbinden des Ansatzstücks und der Rolle und zum axialen Festhalten des Ansatzstücks (4) in Bezug zur Rolle getrennt und unabhängig von den Mitteln zum Zentrieren der Rolle in Bezug zum Ansatzstück sind, und die Mittel (10) zum Zentrieren des Ansatzstücks in Bezug zur Rolle (2) auch geeignet sind, um eine unterschiedliche Wärmedehnung des Ansatzstücks in Bezug zur Rolle bei der besagten hohen Temperatur auszugleichen,
dadurch gekennzeichnet, daß die Mittel zum drehfesten Verbinden des Ansatzstücks und der Rolle und zum axialen Festhalten des Ansatzstücks in Bezug zur Rolle einen Keil (24) aufweisen, der am Ansatzstück (4) befestigt ist und durch elastische Mittel (27) auf eine Abflachung (28) des Endes der Rolle gedrückt wird.

3. Rollenkonstruktion nach Anspruch 2, dadurch gekennzeichnet, daß sich der Keil (24) auf einer am Ansatzstück befestigten Achse (26) frei verschiebt.

4. Rollenkonstruktion nach einem der vorangehenden Ansprüche dadurch gekennzeichnet, daß die Abflachung eine Breite besitzt, die derjenigen des Keils (24) oder des Federstabs entspricht.

5. Rollenkonstruktion für den Transport von Gegenständen mit hoher Temperatur, umfassend:
- eine Keramikrolle mit einer Längsachse und mit zwei Enden, wobei an mindestens einem Ende der Rolle ein Metallansatzstück von allgemein zylindrischer Form angebracht ist,
- Mittel, um das Ansatzstück und die Rolle (2) drehfest zu verbinden und um das Ansatzstück (4) in Bezug zur Rolle (2) axial festzuhalten, und
- Mittel, um die Rolle (2) in Bezug zum Ansatzstück (4) zu zentrieren;
- wobei die Mittel zum drehfesten Verbinden des Ansatzstücks und der Rolle und zum axialen Festhalten des Ansatzstücks (4) in Bezug zur Rolle getrennt und unabhängig von den Mitteln zum Zentrieren der Rolle in Bezug zum Ansatzstück sind, und die Mittel (10) zum Zentrieren des Ansatzstücks in Bezug zur Rolle (2) auch geeignet sind, um eine unterschiedliche Wärmedehnung des Ansatzstücks in Bezug zur Rolle bei der besagten hohen Temperatur auszugleichen,
dadurch gekennzeichnet, daß die Mittel zum drehfesten Verbinden des Ansatzstücks und der Rolle und zum axialen Festhalten des Ansatzstücks in Bezug zur Rolle von einem Stift (30) gebildet werden, der in einen im Ende der Rolle angebrachten Sitz eindringt.

6. Rollenkonstruktion nach einem der vorangehenden Ansprüche dadurch gekennzeichnet, daß die Mittel zum Zentrieren der Rolle in Bezug zum Ansatzstück von längs oder radial verlaufenden Bimetallelementen (14) gebildet werden.

7. Rollenkonstruktion nach einem der vorangehenden Ansprüche dadurch gekennzeichnet, daß die Mittel zum Zentrieren der Rolle in Bezug zum Ansatzstück von längs oder radial verlaufenden elastischen Elementen (16) gebildet werden.

## Claims

1. Roller assembly for transporting articles at high temperature comprising:
- a ceramic roller having a longitudinal spindle and having two ends, at least one generally cylindrical, metallic fitting, mounted at at least one end of the roller;
- means for linking in rotation the fitting and the roller (2), and for axially retaining the fitting (4) with respect to the roller (2) said means being applied on a surface (22, 28) of the fitting; and
- means for centring the roller (2) with respect to the fitting (4),
the means for linking in rotation the fitting and the roller and for axially retaining the fitting (4) with respect to the roller being separate and independent of the means for centring the roller relative to the fitting, and means (10) for centring the fitting with respect to the roller (2) being also able to compensate the differential thermal expansion of the fitting with respect to the roller at said high temperature, characterised in that the means for linking in rotation the fitting and the roller and for axially retaining the fitting with respect to the roller comprise an, in particular bimetallic, elastic leaf (18) fixed to the fitting (4) and applied to a plane on the end of the roller (2).

2. Roller assembly for transporting articles at high temperature comprising:
- a ceramic roller having a longitudinal spindle and having two ends, at least one generally cylindrical, metallic fitting, mounted at at least one end of the roller;
- means for linking in rotation the fitting and the roller (2), and for axially retaining the fitting (4) with respect to the roller (2), said means being applied on a surface (22, 28) of the fitting and
means for centring the roller (2) with respect to the fitting (4),
the means for linking in rotation the fitting and the roller and for axially retaining the fitting (4) with respect to the roller being separate and independent of the means for centring the roller relative to the fitting, and the means (10) for centring the fitting with respect to the roller (2) being also able to compensate the differential thermal expansion of the fitting with respect to the roller at said high temperature,
characterised in that the means for linking in rotation the fitting and the roller and for axially retaining the fitting with respect to the roller comprise a key (24) fixed to the fitting (4) and applied by elastic means (27) to a surface (28) of the end of the roller.

3. Roller assembly according to claim 2, characterised in that the key (24) slides freely on a spindle (26) fixed to the fitting.

4. Roller assembly according to any of the preceding claims, characterised in that the plane has a width corresponding to that of the key (24) or the elastic leaf (18).

5. Roller assembly for transporting articles at high temperature comprising:
- a ceramic roller having a longitudinal spindle and having two ends, at least one generally cylindrical, metallic fitting, mounted at at least one end of the roller;
- means for linking in rotation the fitting and the roller (2), and for axially retaining the fitting (4) with respect to the roller (2); and
- means for centring the roller (2) with respect to the fitting (4), the means for linking in rotation the fitting and the roller and for axially retaining the fitting (4) with respect to the roller (2) being separate and independent of the means for centring the roller relative to the fitting, the means (10) for centring the fitting with respect to the roller (2) being also able to compensate the differential thermal expansion of the fitting with respect to the roller at said high temperature, characterised in that the means for linking in rotation the fitting and the roller (2) and for axially retaining the fitting (4) relative to the roller (2) consist of a pin (30) penetrating a recess in the end of the roller (2).

6. Roller assembly according to any of the preceding claims, characterised in that the means for centring the roller relative to the fitting consist of longitudinal or radial bimetallic elements (14).

7. Roller assembly according to any of the preceding claims, characterised in that the means for centring the roller relative to the fitting consist of longitudinal or radial elastic elements (16).
